# EUROPEAN PATENT APPLICATION

(11) **EP 4 382 371 A1**
(43) Date of publication of application: **12.06.2024**
(21) Application number: 22212364.8
(22) Date of filing: 08.12.2022
(51) Int. Cl.: B60S 1/52, B60S 1/56, B60S 1/38

(54) **WIPER BLADE HAVING A SPRAYING DEVICE**

(71) Applicant: Valeo Systèmes d'Essuyage, 78322 Le Mesnil Saint Denis (FR)
(72) Inventor: SPIECHA, Antoni, 32 050 Skawina (PL); PELCZAR, Daniel, 32 050 Skawina (PL)
(74) Representative: Valeo Visibility

(57) **Abstract**

The present invention relates to a wiper blade 100 for a vehicle, comprising: a body that extends in a longitudinal direction; at least one conduit configured to convey washing fluid along at least a portion of the body; and a spraying device 105 for cleaning an optical surface 210 of a detection device 205, the spraying device 105 being fluidically connected to the at least one conduit, and the spraying device 105 being arranged at a longitudinal end 115a, 115b of the wiper blade 100. The spraying device 105 comprises at least a first and a second spraying means 160a, 160b in communication with the at least one conduit 152a, 152b. The spraying means 160a, 160b are configured to spray the washing fluid onto the optical surface 210 substantially in the same spraying direction, which is a direction away from the longitudinal end 115a, 115b toward the detection device 205.

## Description

### TECHNICAL FIELD

The present invention relates to a wiper blade comprising a spraying device for cleaning detection devices intended for a motor vehicle, and to a vehicle wiper system.

### STATE OF THE ART

Motor vehicles are equipped with detection devices to collect information related to the environment of the motor vehicles, in particular in order to provide the driver with assistance in maneuvering the vehicle. For instance, cameras or other sensors, such as infrared image sensors, are increasingly incorporated into modern vehicles to provide additional information to the driver. To this end, the detection device is commonly installed on the vehicle in such a way as to collect information on the environment in front, on the environment to the rear and on the environment to the sides of the vehicle. The detection devices are therefore conventionally installed on the front face and/or on the rear face and/or on a rear-view mirror of the vehicle. The detection devices may be exposed to the fouling as from dirty water, dust or other types of sprays. Separate cleaning systems are conventionally employed to clean the detection devices to reduce or eliminate the build-up of obstructive debris on the optical surface of the detection device. Conveying fluid to those cleaning systems is required, increasing the energy consumption. Implementing such cleaning systems is also complicated. Therefore, there is a need to rationalize the cleaning systems for such detection devices.

### SUMMARY OF THE INVENTION

An object of the present invention is to alleviate the problems raised above. To be more precise, an object of the invention is to provide a wiper blade comprising a spraying device which can effectively clean an optical surface of a detection device installed on a motor vehicle, while effectively cleaning a windshield of the motor vehicle and limit washing fluid consumption.

To achieve these objectives, the present invention provides a wiper blade for a vehicle, comprising: a body that extends in a longitudinal direction; at least one conduit configured to convey washing fluid along at least a portion of the body; and a spraying device for cleaning an optical surface of a detection device located at a top area of a windshield of the vehicle or in the vicinity of the top area of the windshield, the spraying device being fluidically connected to the at least one conduit, and the spraying device being arranged at a longitudinal end of the wiper blade. The spraying device comprises at least a first and a second spraying means, the first and the second spraying means being in communication with the at least one conduit, wherein the two spraying means are configured to spray the washing fluid onto the optical surface substantially in the same spraying direction, which is a direction away from the longitudinal end toward the detection device.

In other words the praying direction is a direction away from a longitudinal axis of the wiper blade. In other words, the spraying direction is a direction outwardly from the longitudinal end.

Advantageously, with the proposed invention, the washing fluid can be sprayed over a large area of an optical surface by means of the first and second spraying means spraying the washing fluid in substantially same spraying direction. Thus, according to the proposed invention, the optical surface of the detection device can be cleaned effectively, thereby the function of the detection device, for example a camera or a LiDAR, is ensured, thereby creating the conditions for autonomous driving of the future. Another advantage of the proposed invention lies in the fact that it is possible to simplify the spraying installation by eliminating additional cleaning devices normally assigned to clean the optical surface of the detection devices, which allows a reduction in cost of the cleaning and wiping functions.

According to one characteristic of the present invention, the spraying direction is inclined with respect to the longitudinal direction.

According to one characteristic of the present invention, the spraying direction is substantially at an angle of 30° relative to the longitudinal direction.

According to one characteristic of the present invention, the spraying direction is substantially parallel to the longitudinal direction.

According to one characteristic of the present invention, the first and the second spraying means are connected to a downstream end of the at least one conduit via at least two fluid distribution channels.

According to one characteristic of the present invention, a first fluid distribution channel of the at least two fluid distribution channels is in communication with the first spraying means and is arranged substantially parallel to the longitudinal direction of the wiper blade.

According to one characteristic of the present invention, a second fluid distribution channel of the at least two fluid distribution channels is in communication with the second spraying means and is positioned at one of: at an angle with respect to an axis defined by the first fluid distribution channel, and aside the first fluid distribution channel. In one example, the second distribution channel is upwardly inclined from the axis defined by the first fluid distribution channel. Advantageously, this arrangement of the second fluid distribution channel with respect to the first fluid distribution channel ensures that the different portions of the optical surface can be applied with the washing fluid in an effective manner. This arrangement of the second fluid distribution channel with respect to the first fluid distribution channel also ensures that these channels would not interact with a supporting member, i.e., a spline of the wiper blade, thereby ensures to not to modify the configuration of the spline of the wiper blade.

According to one characteristic of the present invention, the first and the second spraying means comprises a nozzle installed at a downstream end of the at least two fluid distribution channels.

According to one characteristic of the present invention, the nozzle comprises a spraying portion and a body portion, wherein the body portion is shaped to be accommodated in a receiving means of the spraying device. The spraying portion comprises a spraying orifice configured to direct the washing fluid outside the nozzle. Further, axes defined by spraying orifices of the first and the second spraying means are substantially parallel. In an example , the receiving means are spherical nests in the spraying device, and the body portion of the nozzles are adapted to be seated in the spherical nests, which allows adjustment of the spraying direction. This arrangement also ensures to provide water tight connection in the spraying device.

According to one characteristic of the present invention, the nozzle is an outlet hole formed on a wall of an end cap and configured to direct the washing fluid outside the nozzle, and wherein axes defined by outlet holes of the first and the second spraying means are substantially parallel.

According to one characteristic of the present invention, a first conduit of the at least one conduit is configured to supply the washing fluid to the spraying device to clean the optical surface, and to at least a nozzle arranged along the body of the wiper blade to clean the windshield of a wiper system. For example, the first conduit is configured to supply the washing fluid to the spraying device and to a plurality of nozzles, for example, holes arranged along the body of the wiper blade. As a variant, both the first conduit and a second conduit may be in communication with the spraying device to supply the washing fluid to the spraying device for performing the cleaning of the optical surface. In another variant, the first conduit is configured to supply the washing fluid to the spraying device to clean the optical surface, and the second conduit is configured to supply the washing fluid to the at least a nozzle arranged along the body of the wiper blade to clean the windshield of a wiper system.

According to one characteristic of the present invention, the wiper blade comprises at least an end cap at the longitudinal end, the spraying device being arranged in the end cap.

According to one characteristic of the present invention, the spraying device is configured to be activated during a predefined angular range of wiping motion of the wiper blade. By activating the spraying of the washing fluid from the spraying device during the predefined angular range of the wiping motion of the wiper blade ensure to effectively use the washing fluid while performing the spraying operation when the wiper blade is in the vicinity of the detection device.

According to one characteristic of the present invention, the spraying device is arranged at a first longitudinal end of the wiper blade, which is opposite to a second longitudinal end of the wiper blade.

According to one characteristic of the present invention, the cross section of the first and/or second distribution channel is decreasing towards the first and/or second spraying means respectively.

According to one characteristic of the present invention, a cross section of the first and/or second fluid distribution channel is increasing towards the first and/or second spraying means respectively.

According to one characteristic of the present invention, the present invention is also related to a windscreen wiping system comprising the wiper blade as has just been presented. According to one aspect, both wiper blades of the wiping system may comprise the spraying device as presented above. According to another aspect, a single wiper blade of the wiping system may comprises the spraying device as presented above.

According to one characteristic, the present invention is also related to a motor vehicle equipped with the windscreen wiping system as has just been presented.

Further advantages, features and details of the invention will be apparent from the following description of preferred embodiments of the invention and from the drawings.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1 shows a perspective view of a wiper blade having a spraying device, according to an embodiment of the present invention.
Fig.2 shows a cross sectional view of the wiper blade shown in the Fig.1.
Fig.3 is a view of the spraying device installed on the wiper blade according to an embodiment of the present invention, in perspective from a first side.
Fig.4 is a view of the spraying device installed on the wiper blade according to an embodiment of the present invention, in perspective from a second side.
Fig.5a is a truncated cross sectional view of the spraying device, according to an embodiment of the present invention.
Fig.5b shows an exemplary spraying means of the spraying device.
Fig.6 is a front of a windscreen equipped with a wiper system comprising at least one wiper blade having a spraying device spraying washing fluid onto an optical screen of a detection device of a motor vehicle, according to an embodiment of the present invention.

### DETAILED DESCRIPTION OF THE INVENTION

The description set forth below in connection with the appended drawings is intended as a description of various embodiments of the disclosed subject matter and is not necessarily intended to represent the only embodiment(s). In certain instances, the description includes specific details for the purpose of providing an understanding of the disclosed subject matter. However, it will be apparent to those skilled in the art that embodiments may be practiced without these specific details. In some instances, well known structures and components may be shown in block diagram form in order to avoid obscuring the concepts of the disclosed subject matter.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or " in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

It should also be noted that, in the following description, the designations "upstream" and "downstream" refer to the direction of flow of the fluids whether they are cleaning or drying fluids, in the cleaning device according to the invention. Thus, the designation "upstream" refers to the side of the device according to the invention through which these fluids are admitted into it, and the designation "downstream" refers to the side of the device according to the invention through which the fluids are dispensed out of it, in particular toward an optical surface of a detection device of a motor vehicle.

Motor vehicles are equipped with detection devices to collect information related to the environment of the motor vehicle, in particular in order to provide the driver with assistance in the driving and/or the maneuvering of the vehicle. It will be appreciated that, without departing from the scope of the invention, the motor vehicle may include a number of sensors, devices, and/or systems that are capable of assisting in driving operations. Examples of the various sensors and systems may include, but are in no way limited to, one or more of cameras (e.g., independent, stereo, combined image, etc.), infrared (IR) sensors, radio frequency (RF) sensors, ultrasonic sensors (e.g., transducers, transceivers, etc.), RADAR sensors (e.g., object-detection sensors and/or systems), LIDAR systems, odometry sensors and/or devices (e.g., encoders, etc.), orientation sensors (e.g., accelerometers, gyroscopes, magnetometer, etc.), navigation sensors and systems (e.g., GPS, etc.), and other ranging, imaging, and/or object-detecting sensors. The sensors may be disposed in an interior space of the vehicle and/or on an outside of the vehicle. In some embodiments, the sensors and systems may be disposed in one or more portions of a vehicle (e.g., the frame, a body panel, a compartment, etc.).

The detection devices equipped to the motor vehicle may be exposed to the fouling as from dirty water, dust, etc. The present invention is directed to provide a wiper blade comprising a spraying device which can effectively clean an optical surface of a detection device installed on the motor vehicle.

Referring now to the drawings, wherein like reference numerals designate identical or corresponding parts throughout the several views. Hereinafter, exemplary embodiments of the present disclosure will be described in detail based on the drawings.

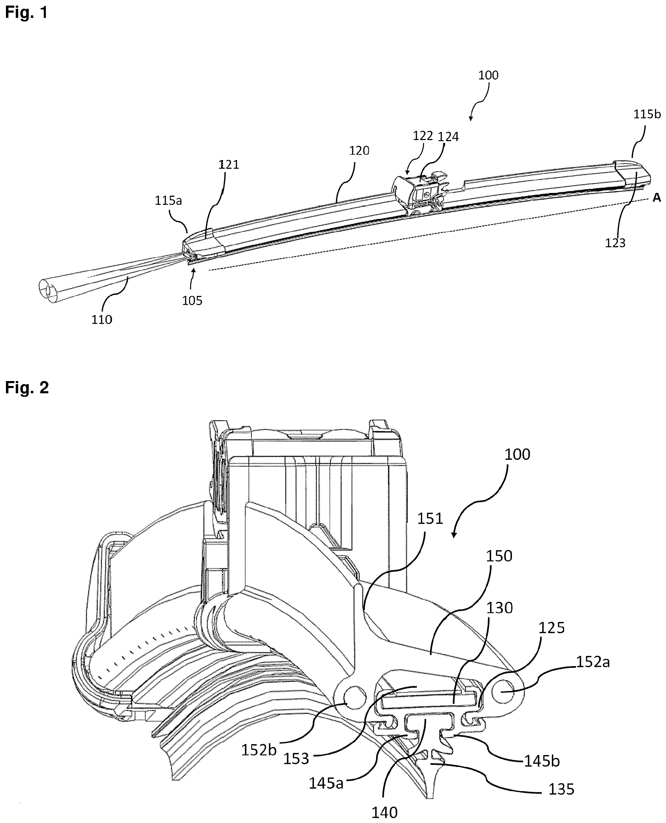

Fig.1 shows a perspective view of a wiper blade comprising a spraying device, according to an exemplary embodiment of the present invention, and the Fig.2 shows a cross sectional view of the wiper blade shown in the Fig.1.

The wiper blade shown in the Fig.1 and the Fig. 2 is intended to be mounted on an outer face of a window of a vehicle, wherein this window may be a front windscreen or a rear windscreen of said vehicle. In the description which follows, the term 'windscreen' will be used as an example application of the window. The wiper blade 100 performs a movement over the outer face of the windscreen so as to evacuate the water present thereon. This movement of the wiper blade is referred as a wiping motion. The movement may for example be a rotation about a rotation point, the latter being linked to the wiper blade 100 via an arm.

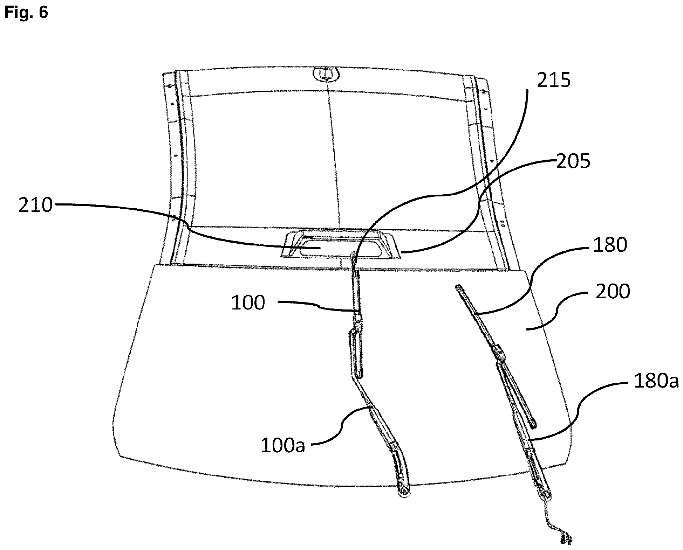

The wiper blade 100 comprises a spraying device 105 configured to project washing fluid 110 as shown in the Fig.1. The latter is contained in a reservoir installed on the vehicle and is circulated to the wiper blade 100 by a pump and/or a module for managing the circulation of the washing fluid. The spraying device 105 is configured to clean an optical surface of the detection device 205 (shown in the Fig.6) located at partially on an inner face of the windshield or in the vicinity of the windshield. In an aspect, the detection device 205 may be located at a top area of a windshield or in the vicinity of the top area of the windshield. The top area may be a portion of a vehicle roof area which is located closer to a top edge of the windshield.

The wiper blade 100 comprises a body 120 that extends along a longitudinal direction 'A' marked on the Fig.1. The wiper blade 100 is terminated by two longitudinal ends, called a first longitudinal end 115a and a second longitudinal end 115b. The second longitudinal end 115b of the wiper blade 100 is that which is closest to the rotation point of the arm carrying the wiper blade 100, while the first longitudinal end 115a is opposite to the second longitudinal end 115b in relation to the body 120 of the wiper blade 100.

According to the exemplary embodiment, the wiper blade 100 may be of the scraper and spreader beam type. It may also be a flat blade.

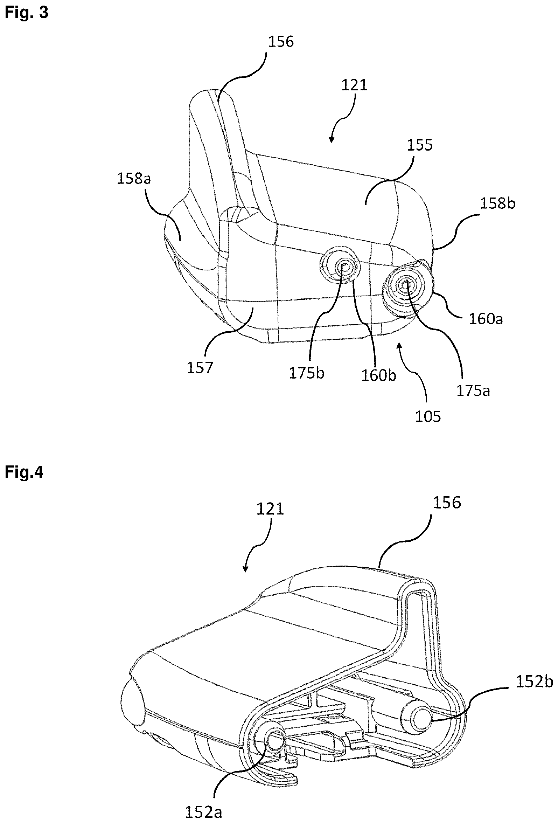

The wiper blade 100 further comprises at least one conduit 152a, 152b (shown in Fig.4) configured to convey the washing fluid along at least a portion of the body 120. The spraying device 105 may be fluidically connected to the at least one conduit 152a, 152b, and the spraying device 105 being arranged at a longitudinal end of the wiper blade. Here, the longitudinal end is the first longitudinal end 115a of the wiper blade. In other words, the spraying device 105 is arranged at the first longitudinal end 105a of the wiper blade 100 configured to have a trajectory that is closer to the top of the windshield when the wiper blade 100 is wiping the windshield than the second longitudinal end 105b of the wiper blade 100.

According to an exemplary embodiment, the at least one conduit 152a. 152b may be formed by a separate tube fixed to the wiper blade 100, so as to supply the washing fluid to the spraying device 105. According to another exemplary embodiment, the at least one conduit 152a, 152b may be formed by a tube arranged inside one of the constituent elements of the wiper blade 100, as will be explained below. In either of the alternatives mentioned above, the at least one conduit 152a, 152b is in communication with the spraying device 105. Throughout the description, and whichever elements are in communication, such an expression in general means that the at least one conduit is connected directly or indirectly to the spraying device 105, such that the washing fluid passing through the at least one conduit 152a, 152b can reach the spraying device 105 being sprayed onto the optical surface of the detection device 205.

Substantially in the center of the wiper blade 100, a means 122 for fixing the wiper blade 100 to the arm which generates its movement, in particular its rotation is arranged. This fixing means 122 comprises at least one adapter 124 connected by a pivot link to a connector. The adapter 124 configured to provide mechanical connection between the wiper blade 100 and the arm. Such an adapter 124 is consequently a part of which the shape can be modified according to the shape of the end of the arm, for example a straight end, a hook shape, or having a pivot finger and one or more fixing lugs. The fixing means 122 may be configured to form the entry point of the washing fluid in the wiper blade 100.

As shown in the Fig.2, the wiper blade 100 comprises a support 125 within which at least one stiffening spine 130 is housed. The support 125 is a plastic part in which a central cavity is arranged, which is closed along the wiper blade 100 and open at the first and second longitudinal ends 115a, 115b and of this wiper blade 100. The stiffening spine 130 extends inside this central cavity and is formed in particular by a metallic strip which forces the wiper blade 100 to assume a concave profile when not applied to the windscreen. Alternatively the wiper blade 100 may comprise two stiffening spines 130. The support 125 also comprises a longitudinal housing in which the scraper is inserted, also known as the wiping strip 135. The latter is a flexible component of the wiper blade 100 resting against the outer face of the windscreen. The wiping strip 135 comprises a lug 140 which extends into the longitudinal housing, this lug 140 being held between two flanks 145a, 145b constituting the support 125 and surrounding the lug 140. On its upper part, the support is covered by an air deflector 150 arranged to utilize the dynamic effect of the motion of the vehicle to increase the contact force of the wiper blade 100 on the windscreen. It is understood that the air deflector 150 surrounds the upper part of the support 125 .The air deflector 150 also comprises a fin 151 which extends along the wiper blade 100. According to one exemplary embodiment, the air deflector 150 is the constituent part of the wiper blade 100 in which the at least one conduit 152a, 152b is arranged, which conducts the washing fluid. It is therefore in this way that the fluid can reach the spraying device 105. The stiffening spines 130, the wiping strip 135 and in some cases the support 125 extend without interruption from the first longitudinal end 115a to the second longitudinal end 115b. The air deflector 150 may itself be formed in two separate portions and mounted on the support 125 of the wiper blade 100. The support 125, the air deflector 150, the spline(s) 130 and the strip 135 form the body of the wiper blade 100.

According to one aspect, the spraying device 105 may comprise two conduits such as a first conduit 152a and a second conduit 152b. In an aspect, the first conduit 152a is configured to supply the washing fluid to the spraying device 105 to clean the optical surface, and to at least a nozzle (not shown in the figures) arranged along the body 120 of the wiper blade 100 to clean the windshield of a wiper system. For example, the first conduit 152a is configured to supply the washing fluid to the spraying device 105 and to a plurality of nozzles, for example, holes arranged along the body 120 of the wiper blade 100. As a variant, both the first conduit 152a and the second conduit 152b may be in communication with the spraying device 105 to supply the washing fluid to the spraying device 105 for performing the cleaning of the optical surface. In another variant, the first conduit 152a may be configured to supply the washing fluid to the spraying device 105 to clean the optical surface, and the second conduit 152b may be configured to supply the washing fluid to the at least a nozzle arranged along the body of the wiper blade to clean the windshield of a wiper system.

Optionally, the wiper blade 100 shown in the Fig.1 and Fig.2 also comprises a heating element 153 (shown in Fig.2) extending over substantially entire length of the wiper blade 100, thereby transmitting the heat generated by the heating element 153 to the wiper blade 100.

The wiper blade 100 comprises an end cap 121 (shown in the Fig.1) mounted at a longitudinal end, for example, the first longitudinal end 115a of the wiper blade 100. The spraying device 105 is arranged in the end cap 121. The end cap 121 threads onto the first longitudinal end 115a of the wiper blade 100 and comes to rest against this. The second longitudinal end 115b of the wiper blade 100 may be fixed with another end cap 123 (shown in the Fig.1). In an aspect, the end cap 121 that is configured to be fixed onto the first longitudinal end 115a of the wiper blade 100 is designed to integrate the spraying device 100 and the other end cap 122 that is configured to be fixed onto the second longitudinal end 115b of the wiper blade 100 may be similar to the conventional end cap known to a person skilled in the art.

Fig.3 and Fig.4 illustrates an exemplary embodiment of the spraying device 105, shown independent of the wiper blade 100. FIG. 3 is a perspective view showing a first side of the spraying device 105, while FIG. 4 is a perspective view showing an opposite side of the spraying device 105, illustrating more particularly the interior of the spraying device 105. As can be seen from the Fig. 3 and the Fig.4, the end cap 121 comprises a top wall 155 defining an open volume housing at least the air deflector 150 of the wiper blade 100. The shape of the top wall 155 is thus complementary to the outer shape of the air deflector 150. For this reason, the end cap 155 comprises a deflector wing 156 which caps the fin 151 formed on the air deflector 150 of the wiper blade 100 according to the invention. The end cap 105 is terminated by a rear face 157 which joins the lateral sides 158a, 158b of the end cap 121.

The spraying device 105 further comprises at least a first and second spraying means 160a, 160b in communication with at least one conduit 152a, 152b, and configured to spray the washing fluid onto the optical surface substantially in the same spraying direction. The general spraying direction of the first and the second spraying means is a direction away from the first longitudinal end 115a toward the detection device 205. In other words, the spraying direction is a direction away from a longitudinal axis of the wiper blade 100 toward the detection device 205. In an aspect, the spraying direction is inclined with respect to the longitudinal direction. For example, the spraying direction is substantially at an angle of 30° relative to the longitudinal direction. In another aspect, the spraying direction is substantially parallel to the longitudinal direction.

**As** can be seen from the Fig.3, the first and second spraying means 160a, 160b opens at the rear face 157 of the end cap 121. Further, the first and the second spraying means 160a, 160b are opened at different levels on the rear face 157. For instance, the first spraying means 160a opens substantially at the middle of the rear face 157 and the second spraying means 160b opens substantially closer to the top wall 155 of the spraying device 105.

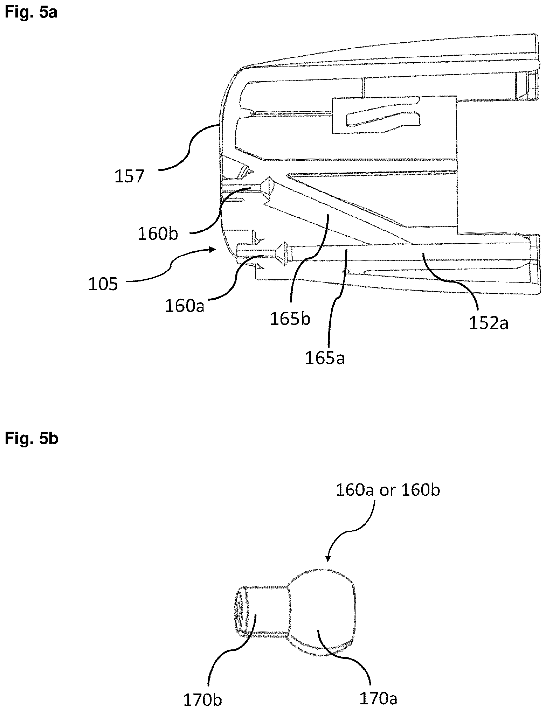

Fig.5a is a truncated cross sectional view of the spraying device, according to an embodiment of the present invention, and Fig.5b shows an exemplary spraying means of the spraying device. As can be seen from the Fig.5a, the first conduit 152a splits into two fluid distribution channels 165a, 165b at the downstream end of the first conduit 152a to be in communication with the first and second spraying means 160a, 160b. The first and second spraying means 160a, 160b are connected with the at least two fluid distribution channels 165a, 165b at the downstream end of the at least two fluid distribution channels 165a, 165b. According to an aspect of the present invention, the fluid distribution channels 165a, 165b can be constructed in different shapes to manage the different flow types and volumes of the washing fluid.

In an aspect, a first distribution channel 165a of the at least two fluid distribution channels 165a, 165b is in communication with the first spraying means 160a and is arranged substantially parallel to the longitudinal direction of the wiper blade 100. Further, a second fluid distribution channel 165b is in communication with the second spraying means 160b and is positioned at one of: at an angle with respect to an axis defined by the first fluid distribution channel 165a, and aside the first fluid distribution channel 165a. In one example, the second distribution channel 165b is upwardly inclined from an axis defined by the first fluid distribution channel 165a. Advantageously, this arrangement of the second fluid distribution channel 165b with respect to the first fluid distribution channel 165a ensures that the different portions of the optical surface can be applied with the washing fluid in an effective manner.

The first and second spraying means 160a, 160b means comprises a nozzle installed at a downstream end of at least two fluid distribution channels 165a, 165b.

According to one variant of the present invention, the nozzle is an outlet hole formed on a wall of an end cap 121 and configured to direct the washing fluid outside the nozzle, and axes defined by outlet holes of the first and the second spraying means 160a, 160b are substantially parallel.

According to another variant of the present invention, the nozzle 160a, 160b comprises a spraying portion 170b and a body portion 170a, as can be seen from the Fig.5b. The spraying portion 170b is integrally formed with the body portion 170a. The body portion 170a is shaped to be accommodated in a receiving means of the spraying device 105. For instance, the receiving means are spherical nests in the spraying device 105, and the body portion 170a is adapted to be seated in a spherical nest, which allows adjustment of the spraying direction. This arrangement ensures to provide water tight connection in the spraying device 105.

Further, the spraying portion 170a comprises a spraying orifice configured to direct the washing fluid outside the nozzle. For instance, the first spraying means 160a comprises a first spraying orifice and the second spraying means 160b comprises a second spraying orifice. Further, axes defined by the first and second spraying orifices 175a, 175b (shown in Fig.3) are substantially parallel.

In one aspect, a first spraying means 160a and a second spraying means 160b are of same type. In another aspect, the first spraying means 160a and the second spraying means 160b are of different type. It is understood to a person skilled in the art that the geometry, shape and dimensions of the spraying means, i.e., nozzles 160a, 160b can vary according to the requirements and type of fluid jet. Although the present invention is discussed with respect to the spraying means 160a, 160b shown in the Fig.5b, it is understood that the spraying device 105 can employ any type of spraying means 160a, 160b known in the art.

The spraying device 105 is configured to dispense the washing fluid onto the optical surface via the first and second spraying means 160a, 160b in substantially same spraying direction when the spraying device 105 is activated. During operation, the washing fluid from the first conduit 152a is guided towards the first and second spraying means 160a, 160b via the at least two fluid distribution channels 165a, 165b, thereby the first and second spraying means 160a, 160b projects the washing fluid onto the optical screen when activated. The spraying device 105 is configured to be activated during a predefined angular range of the wiping motion of the wiper blade. For instance, with the aid of a control system in the wiper system, the spraying device 105 can be activated during the predefined angular range of the wiping motion of the wiper blade. Based on the position of the detection device 205 with respect to the windscreen, the predefined angular range can be defined by the control system. For instance, the control system may define the predefined angular range based on at least one of: position of the detection device, and a wiping speed. The detection device 205 may be arranged on a vehicle roof closer to a top edge of the windshield. By activating the spraying device 105 during the predefined angular range of the wiping motion of the wiper blade, the washing fluid can be effectively used while performing the spraying operation only when the wiper blade 105 is in the vicinity of the detection device, hence limiting washing fluid consumption. Further, the first and second spraying means 160a, 160b are arranged such a way that the first and second praying means 160a, 160b projects the washing fluid in substantially same spraying direction, as discussed. In one aspect, using two spraying means, different types of fluid jets, for example, mist, jet, etc., can be sprayed onto the optical surface. In another aspect, using two spraying means, same type of fluid jets can be sprayed onto the optical surface.

Fig.6 is a front of a windscreen equipped with a wiper system comprising at least one wiper blade having a spraying device spraying washing fluid onto an optical screen of a detection device of a motor vehicle, according to an embodiment of the present invention. Such a system comprises a first wiper blade 100 and a second wiper blade 180, at least one of which is produced according to any of the features given above. In a complementary fashion, the other wiper blade 180 does not have any washing fluid spraying means. The wiper system is installed on the windscreen 200 so as firstly to clean the windshield 200 and secondly or at least partially simultaneously to clean an optical surface 210 of a detection device 205 installed in the vicinity of the windshield 200. The first wiper blade 100 is configured to be driven by a first wiper arm 100a, and the second wiper blade 180 is configured to be driven by a second wiper arm 180a. The first wiper blade 100 may be configured to be mounted on a driver's side of the vehicle and the second wiper blade 180 may be configured to be mounted on a passenger's side of the vehicle. Both the wiper arms 100a, 180a are configured to perform a reciprocating motion for wiping the windscreen 200. As previously mentioned, at least one of the wiper blade 100 is equipped with the spraying device 105. The spraying device 105 is configured to dispense the washing fluid onto the optical surface 210 via the at least two spraying means 160a, 160b in substantially same spraying direction when the spraying device 105 is activated. During the operation of the wiper system, the spraying device 105 sprays the washing fluid onto the optical surface 210 as marked by reference numeral 215 in the Fig.6.

The invention being thus described, it will be obvious that the same may be varied in many ways. Such variations are not to be regarded as a departure from the scope of the invention, and all such modifications as would be obvious to one skilled in the art are intended to be included in the scope of the following claims.

### LIST OF REFERENCE SIGNS

- 100: Wiper blade
- 105: Spraying device
- 110: Fluid jets
- 115a: First longitudinal end of the wiper blade
- 115b: Second longitudinal end of the wiper blade
- 120: Body of the wiper blade
- 121, 123: end caps
- 122: Fixing means
- 124: Adaptor
- 125: Holder
- 130: Spline
- 135: Wiper strip
- 140: Lug of the wiper strip
- 145a,: 145b Flanks of the holder
- 150: Air guide
- 151: Fin of Air guide
- 152a, 152b: Conduits
- 153: Heating element
- 155: Top wall of the spraying device
- 156: Deflector wing
- 157: Rear face of the spraying device
- 158a, 158b: Lateral faces of the spraying device
- 160a, 160b: Spraying means
- 165a, 165b: Fluid distribution channels
- 170a: Body portion of spraying means
- 170b: Spraying portion of spraying means
- 175a, 175b: Spraying orifices
- 180: Second wiper blade
- 180a: wiper arm of the second wiper blade
- 200: windshield
- 205: Detection device
- 210: Optical surface of the detection device.

## Claims

1. A wiper blade (100) for a vehicle, comprising:
- a body that extends in a longitudinal direction;
- at least one conduit configured to convey washing fluid along at least a portion of the body;
- a spraying device (105) for cleaning an optical surface (210) of a detection device (205) located at a top area of a windshield of the vehicle or in the vicinity of the top area of the windshield (200), the spraying device (105) being fluidically connected to the at least one conduit, and the spraying device (105) being arranged at a longitudinal end (115a, 115b) of the wiper blade (100), and
- wherein the spraying device (105) comprises at least a first and a second spraying means (160a, 160b), the first and the second spraying means (160a, 160b) being in communication with the at least one conduit (152a, 152b), wherein the two spraying means (160a, 160b) are configured to spray the washing fluid onto the optical surface (210) substantially in the same spraying direction, which is a direction away from the longitudinal end (115a, 115b) toward the detection device (205).

2. The wiper blade (100) as claimed in claim 1, wherein the spraying direction is inclined with respect to the longitudinal direction.

3. The wiper blade (100) as claimed in claims 1 or 2, wherein the spraying direction is substantially at an angle of 30° relative to the longitudinal direction.

4. The wiper blade (100) as claimed in claim 1, wherein the spraying direction is substantially parallel to the longitudinal direction.

5. The wiper blade (100) as claimed in any one of the preceding claims, wherein the first and second spraying means (160a, 160b) are connected to a downstream end of the at least one conduit (152a, 152b) via at least two fluid distribution channels (165a, 165b).

6. The wiper blade (100) as claimed in claim 5, wherein a first fluid distribution channel (165a) of the at least two fluid distribution channels (165a, 165b) is in communication with the first spraying means (160a) and is arranged substantially parallel to the longitudinal direction (A) of the wiper blade (100).

7. The wiper blade (100) as claimed in claim 5 or 6, wherein a second fluid distribution channel (165b) of the at least two fluid distribution channels (165a, 165b) is in communication with the second spraying means (160b) and is positioned at one of: at an angle with respect to an axis defined by the first fluid distribution channel (165a), and aside the first fluid distribution channel (165a).

8. The wiper blade (100) as claimed in any one of preceding claims, wherein the first and the second spraying means (160a, 160b) comprises a nozzle installed at a downstream end of the at least two fluid distribution channels (165a 165b).

9. The wiper blade (100) as claimed in claim 8, wherein the nozzle comprises a spraying portion (170b) and a body portion (170a),
wherein the body portion (170a) is shaped to be accommodated in a receiving means of the spraying device (105), and
the spraying portion (170b) comprises a spraying orifice configured to direct the washing fluid outside the nozzle (160a, 160b), and axes defined by spraying orifices (175a, 175b) of the first and the second spraying means (160a, 160b) are substantially parallel.

10. The wiper blade (100) as claimed in claim 8, wherein the nozzle is an outlet hole formed on a wall of an end cap and configured to direct the washing fluid outside the nozzle, and wherein axes defined by outlet holes of the first and the second spraying means (160a, 160b) are substantially parallel.

11. The wiper blade (100) as claimed in any one of the preceding claims, wherein the wiper blade (100) comprises at least an end cap at the longitudinal end, the spraying device (105) being arranged in the end cap.

12. The wiper blade (100) as claimed in any one of preceding claims, wherein the spraying device (105) is configured to be activated during a predefined angular range of a wiping motion of the wiper blade.

13. The wiper blade (100) as claimed in any one of the preceding claims, wherein the spraying device (105) is arranged at a first longitudinal end (115a) of the wiper blade (100) which is opposite to a second longitudinal end (115b) of the wiper blade (100).

14. A windscreen wiping system comprising a first wiper blade (100) according to any one of claims 1 to 13, and a second wiper blade (180), wherein the first wiper blade (100) being driven by a first wiper arm (100a) and the second wiper blade (180) being driven by a second wiper arm (180a).

15. A motor vehicle (100) comprising a windscreen wiping system according to preceding claim 14.
